# EUROPEAN PATENT APPLICATION

(11) **EP 4 037 155 A1**
(43) Date of publication of application: **03.08.2022**
(21) Application number: 21209202.7
(22) Date of filing: 19.11.2021
(51) Int. Cl.: H02K 1/276, H02K 29/03

(54) **PERMANENT MAGNET-EMBEDDED MOTOR AND PUMP DEVICE**

(30) Priority: 29.01.2021 JP 2021012789
(71) Applicant: MIKUNI CORPORATION, Chiyoda-ku Tokyo 101-0021 (JP); National University Corporation Gunma University, Maebashi-shi, Gunma 371-8510 (JP)
(72) Inventor: SUZUKI, Shin, Takizawa-shi, 0200698 (JP); ISHIKAWA, Takeo, Maebashi-shi, 3718510 (JP); TAKATA, Kota, Maebashi-shi, 3718510 (JP)
(74) Representative: Becker, Eberhard

(57) **Abstract**

A permanent magnet-embedded motor and a pump device are provided. The permanent magnet-embedded motor (M) includes: a stator (St), including a stator core (20) having teeth (22) and slots (23) disposed in a circumferential direction and coils (40) wound around the teeth; and a rotor (Rt), including a rotor core (50) having insertion fitting holes (51) disposed to face the teeth of the stator and permanent magnets (60) inserted and fitted into the insertion fitting holes. The rotor core (50) includes: a groove-shaped recessed part (52), provided between the insertion fitting holes to define an outer circumferential magnetic pole part (53); a pair of notch parts (53a, 53a), provided from both ends toward a center side of the outer circumferential magnetic pole part to be recessed inward with respect to an outer circumferential contour (50a); and an outer circumferential magnetic pole surface (53b), sandwiched between the pair of notch parts.

## Description

### BACKGROUND

### Technical Field

The disclosure relates to a permanent magnet-embedded motor including a stator in which a coil is wound and a rotor in which a permanent magnet is embedded, and a pump device using the same as a drive source.

### Description of Related Art

As a conventional permanent magnet-embedded motor, a permanent magnet-type motor including an annular stator having teeth and slots disposed in a circumferential direction, coils wound around the teeth, and a rotor that is rotatably disposed inside the stator and in which a skew is given to embedding holes disposed in the circumferential direction to embed permanent magnets therein, in which the permanent magnets are embedded in multiple stages and an angle difference is provided for the permanent magnets in each stage to secure a skew with respect to the embedding holes of the rotor is known (for example, Patent Document 1).

In this permanent magnet-type motor, a cogging torque acting as a disturbance can be reduced by securing a skew in the permanent magnet, but since a plurality of permanent magnets is disposed in multiple stages in an axial direction of the rotating shaft, the structure is complicated, and this causes an increase in number of parts and an increase in costs.

Also, another permanent magnet-embedded motor including an annular stator having teeth and slots disposed in a circumferential direction, coils wound around the teeth, and a rotor that is rotatably disposed inside the stator and has main permanent magnets embedded in embedding holes disposed in the circumferential direction, in which a plurality of auxiliary permanent magnets is embedded in the rotor in addition to the main permanent magnets to collect a magnetic flux closer to the center of the main permanent magnets (at the center of the magnetic pole piece of the rotor) is known (for example, Patent Document 2).

In this permanent magnet-embedded motor, a cogging torque can be reduced by embedding the plurality of auxiliary permanent magnets in the rotor, but since the plurality of auxiliary permanent magnets is required in addition to the main permanent magnets, the structure is complicated, and this causes an increase in number of parts and an increase in costs.

### Patent Documents

[Patent Document 1] Japanese Patent Laid-Open No. 2007-110868
[Patent Document 2] Japanese Patent No. 6083640

### SUMMARY

The disclosure has been made in view of the above-described circumstances and provides a permanent magnet-embedded motor capable of reducing a cogging torque while simplifying the structure and reducing costs in view of the above-described problems of the conventional technologies, and a pump device using the same as a drive source.

A permanent magnet-embedded motor of the disclosure has a configuration including: a stator, including: a stator core in an annular shape having teeth and slots disposed in a circumferential direction, and coils wound around the teeth; and a rotor, including: a rotor core having insertion fitting holes disposed to face the teeth of the stator and disposed in the circumferential direction, and permanent magnets inserted and fitted into the insertion fitting holes, in which the rotor core includes: a groove-shaped recessed part, provided between the insertion fitting holes in the circumferential direction to define an outer circumferential magnetic pole part which generates a magnetic pole corresponding to each of the permanent magnets; a pair of notch parts, provided from both ends toward a center side of each of the outer circumferential magnetic pole parts in the circumferential direction to be recessed inward with respect to an outer circumferential contour; and an outer circumferential magnetic pole surface, sandwiched between the pair of notch parts.

In the permanent magnet-embedded motor described above, a configuration may be employed, in which the insertion fitting hole has a cross-sectional shape which is long in a perpendicular direction perpendicular to a radial direction of the rotor, and the permanent magnet has a flat plate shape having a rectangular cross section which is long in the perpendicular direction and is inserted and fitted into the insertion fitting hole with gaps provided at both ends in the perpendicular direction.

In the permanent magnet-embedded motor described above, a configuration may be employed, in which the groove-shaped recessed part is provided to have a space having a semicircular cross section, the insertion fitting hole has a cross-sectional shape which is long in a perpendicular direction with respect to a radial direction of the rotor and includes a convexly curved surface protruding inward following a wall part of the groove-shaped recessed part at both ends in the perpendicular direction, and the permanent magnet has a flat plate shape having a rectangular cross section which is long in the perpendicular direction and is inserted and fitted into the insertion fitting hole with gaps provided at both ends in the perpendicular direction.

In the permanent magnet-embedded motor described above, a configuration may be employed, in which when a width dimension of the outer circumferential magnetic pole surface is Pw, and a width dimension of the permanent magnet in the perpendicular direction is Mw, Pw < Mw is satisfied.

In the permanent magnet-embedded motor described above, a configuration may be employed, in which when a width dimension of the outer circumferential magnetic pole surface is Pw, and a width dimension of the permanent magnet in the perpendicular direction is Mw, a value of (Mw-Pw)/2 = Δw is set to 3 mm or less.

In the permanent magnet-embedded motor described above, a configuration may be employed, in which the pair of notch parts each include: a flat surface, extending parallel to a perpendicular direction perpendicular to a radial direction of the rotor and parallel to a rotation center line of the rotor; and a rising surface, rising from the flat surface toward the outer circumferential magnetic pole surface.

In the permanent magnet-embedded motor described above, a configuration may be employed, in which a wall thickness dimension of a wall part defining the flat surface is provided to be substantially the same as a wall thickness dimension of a wall part defining the groove-shaped recessed part.

In the permanent magnet-embedded motor described above, a configuration may be employed, in which when a distal end width dimension of the teeth is Tw, an opening width dimension of the slot is Sw, and a width dimension of the outer circumferential magnetic pole surface is Pw, a relationship of Tw : Sw : Pw = 4.5 to 6.5 : 1 to 3 : 5 to 7 is satisfied.

In the permanent magnet-embedded motor described above, a configuration may be employed, in which the rotor core includes a filling hole provided to be communicating with the insertion fitting hole and filled with an adhesive on an inner side of the insertion fitting hole in a radial direction.

In the permanent magnet-embedded motor described above, a configuration may be employed, in which a number of magnetic poles of the rotor is 2n (n is a natural number), and a number of teeth and slots of the stator is 3n (n is a natural number), respectively.

A pump device of the disclosure has a configuration including: a pump unit which performs suctioning and discharging of a fluid; a rotating shaft, connected to the pump unit; and a drive source, exerting a driving force on the rotating shaft, in which the drive source is any one of the permanent magnet-embedded motors having configurations described above.

In the pump unit described above, a configuration may be employed in which, the pump unit is a trochoid pump including: an inner rotor to which the rotating shaft is connected; and an outer rotor that meshes with the inner rotor.

According to the permanent magnet-embedded motor having the above-described configuration, the cogging torque can be reduced while simplifying the structure and reducing costs. Also, when such a permanent magnet-embedded motor is used as a drive source, a pump device with less vibration and noise can be obtained.

### BRIEF DESCRIPTION OF THE DRAWINGS

FIG. 1 is an external perspective view illustrating a pump device including a permanent magnet-embedded motor according to the disclosure.
FIG. 2 is a cross-sectional view of the pump device illustrated in FIG. 1.
FIG. 3 is an exploded perspective view of the pump device illustrated in FIG. 1.

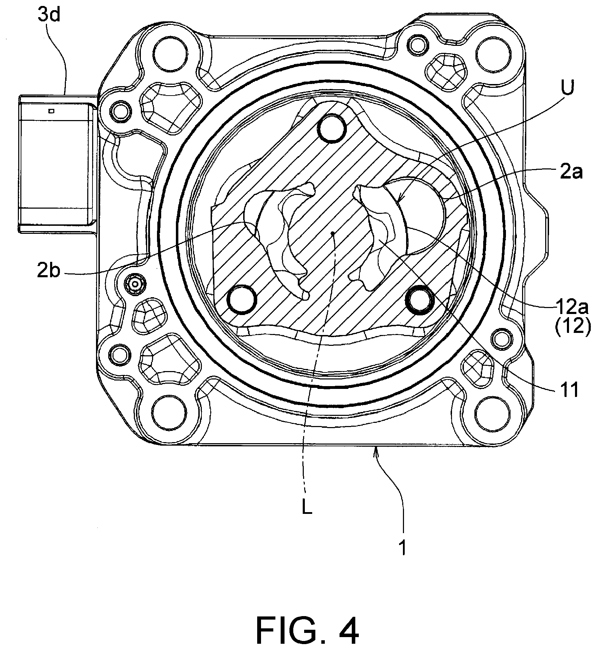

FIG. 4 shows a suction port and a discharge port of a fluid in the pump device illustrated in FIG. 1 and is a cross-sectional view along a plane perpendicular to a rotation center line.
FIG. 5 is an external perspective view illustrating the permanent magnet-embedded motor as a drive source included in the pump device illustrated in FIG. 1.
FIG. 6 is an exploded perspective view of the permanent magnet-embedded motor illustrated in FIG. 5.
FIG. 7 illustrates an internal structure of the permanent magnet-embedded motor illustrated in FIG. 5 and is a cross-sectional view along a plane perpendicular to the rotation center line.
FIG. 8 is an external perspective view illustrating a rotor forming a part of the permanent magnet-embedded motor illustrated in FIG. 5.
FIG. 9 is a front view illustrating a rotor core forming a part of the rotor illustrated in FIG. 8.
FIG. 10 is an enlarged cross-sectional view in which a part of the permanent magnet-embedded motor is partially enlarged.
FIG. 11 is a graph showing a relationship between a width dimension of an outer circumferential magnetic pole surface and a wall thickness dimension of a wall part defining a flat surface of a notch part of the rotor, and a cogging torque.
FIG. 12 is a graph showing a relationship between an appropriate range of the width dimension of the outer circumferential magnetic pole surface of the rotor and the cogging torque.
FIG. 13 is a graph showing a relationship between an appropriate range of the wall thickness dimension of the wall part defining the flat surface of the notch part of the rotor and the cogging torque.
FIG. 14 is a distribution diagram of magnetic lines of force partially illustrating a flow of magnetic lines of force when a rotation angle is 0 degrees in a permanent magnet-embedded motor as a comparative example in which a notch part is not provided in an outer circumferential magnetic pole part of the rotor.
FIG. 15 is a distribution diagram of magnetic lines of force partially illustrating a flow of magnetic lines of force when a rotation angle is 5 degrees in the permanent magnet-embedded motor as the comparative example in which the notch part is not provided in the outer circumferential magnetic pole part of the rotor.
FIG. 16 is a distribution diagram of magnetic lines of force partially illustrating a flow of magnetic lines of force when a rotation angle is 0 degrees in the permanent magnet-embedded motor in which the notch part is provided in the outer circumferential magnetic pole part of the rotor.
FIG. 17 is a distribution diagram of magnetic lines of force partially illustrating a flow of magnetic lines of force when a rotation angle is 5 degrees in the permanent magnet-embedded motor in which the notch part is provided in the outer circumferential magnetic pole part of the rotor.
FIG. 18 is a graph showing a cogging torque (two-dot dashed line) of the comparative example in which the notch part is not provided in the outer circumferential magnetic pole part of the rotor and a cogging torque (solid line and dashed-dotted line) of the example in which the notch part is provided in the outer circumferential magnetic pole part of the rotor in the permanent magnet-embedded motor.
FIG. 19 is a partial cross-sectional view illustrating another embodiment of the notch part provided in the outer circumferential magnetic pole part of the rotor.

### DESCRIPTION OF THE EMBODIMENTS

Hereinafter, embodiments of the disclosure will be described with reference to the accompanying drawings.

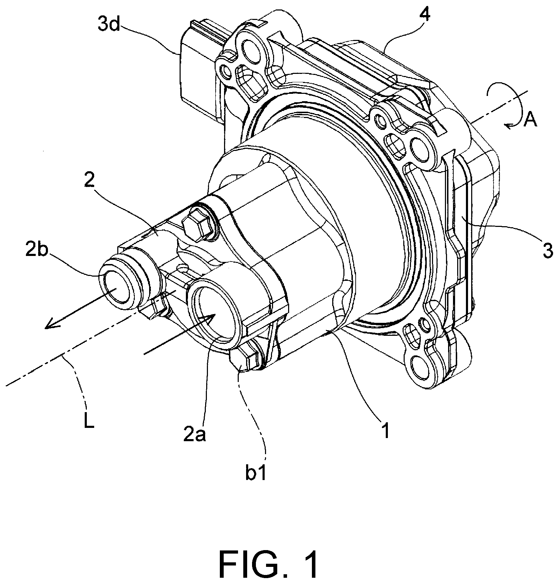

As illustrated in FIGS. 1 to 3, a pump device including a permanent magnet-embedded motor according to one embodiment includes a housing main body 1, a pump cover 2, a motor cover 3, a substrate cover 4, a rotating shaft 5, and a pump unit U, a permanent magnet-embedded motor M as a drive source, a circuit board CB, and the like.

The pump unit U suctions and discharges a fluid (here, oil), and is a trochoid pump including an inner rotor 11 and an outer rotor 12.

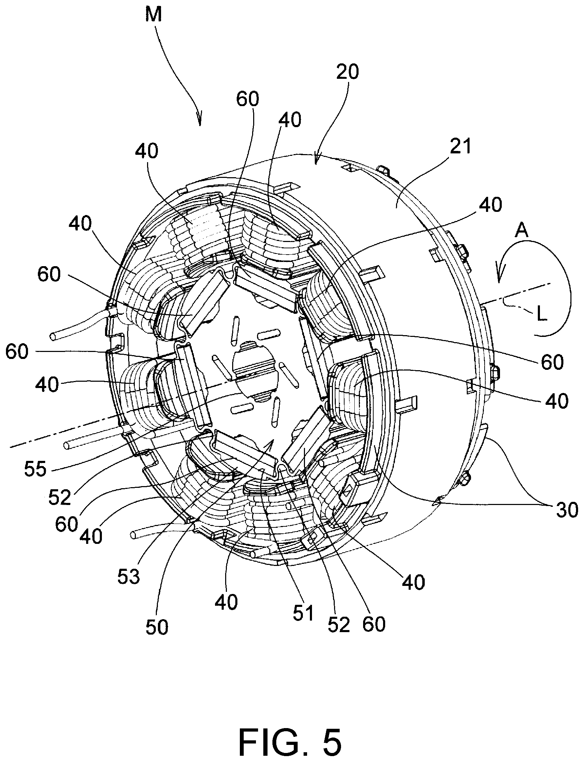

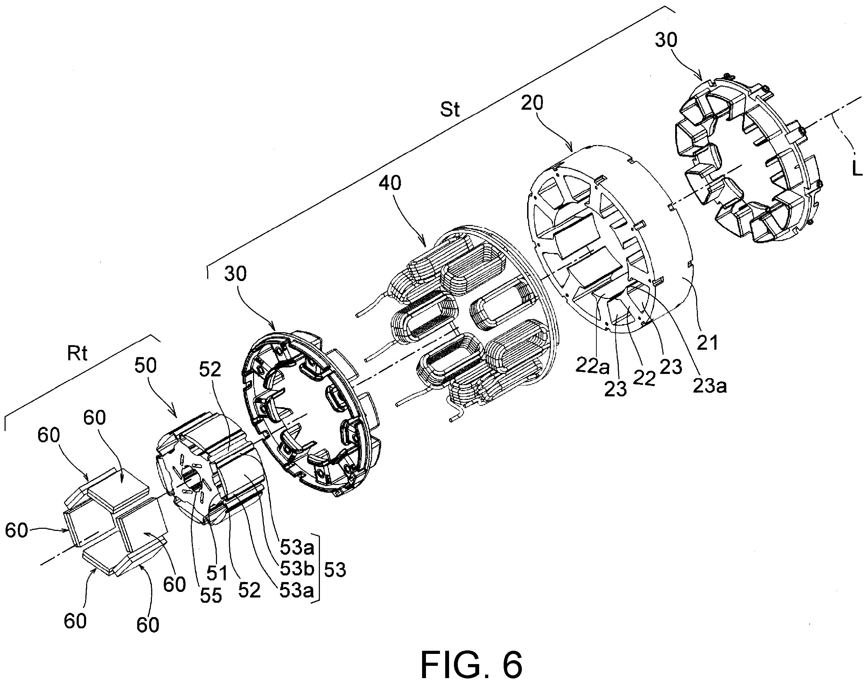

As illustrated in FIGS. 5 and 6, the permanent magnet-embedded motor M includes a stator St having a stator core 20, a bobbin 30, and a coil 40, and a rotor Rt having a rotor core 50 and a permanent magnet 60, and is a three-phase brushless motor having nine slots and six magnetic poles.

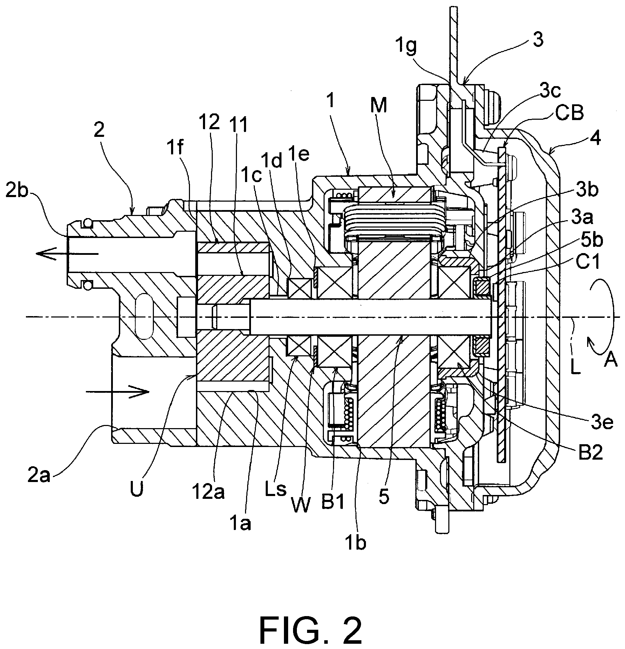

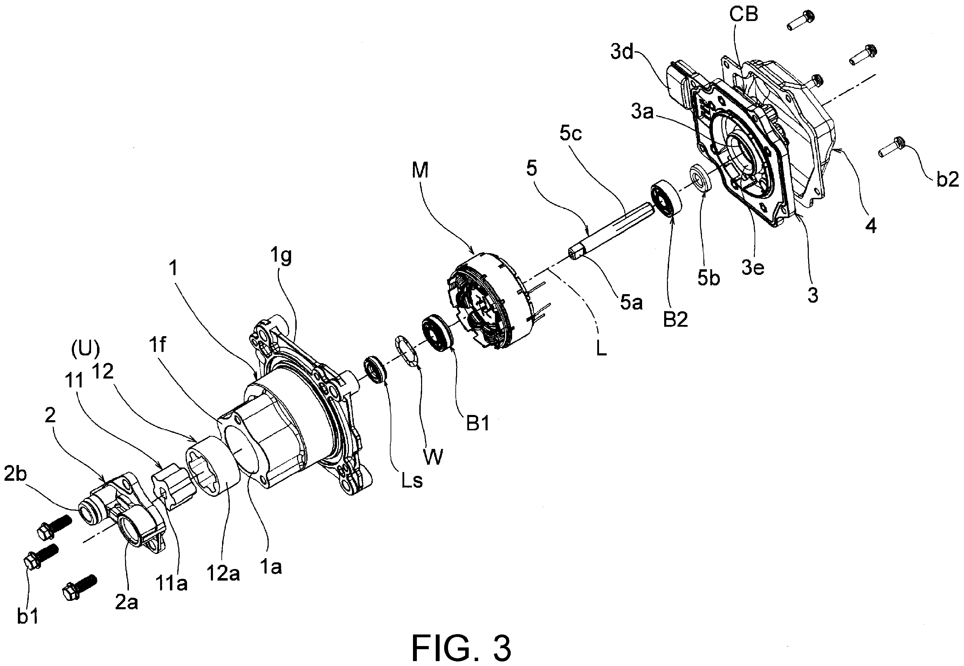

The housing main body 1 is formed of an aluminum material or the like, and as illustrated in FIGS. 2 and 3, includes a housing recessed part 1a that houses the pump unit U, a housing recessed part 1b that houses the drive source, a communication passage 1c that allows the housing recessed part 1a and the housing recessed part 1b to communicate with each other, an annular recessed part 1d, an annular recessed part 1e, an end surface If, and an end surface 1g.

The communication passage 1c is formed in a cylindrical shape with a rotation center line L of the permanent magnet-embedded motor M as a center, and through which the rotating shaft 5 is inserted with a predetermined gap therebetween.

The annular recessed part 1d is formed in an annular shape with the rotation center line L as a center so that a lip-type seal Ls is fitted therein.

The annular recessed part 1e is formed in an annular shape with the rotation center line L as a center so that a bearing B1 rotatably supporting the rotating shaft 5 is fitted therein by interposing a washer W between itself and the lip-type seal Ls.

The pump cover 2 is formed of an aluminum material or the like, is joined to the end surface 1f of the housing main body 1 to cover the housing recessed part 1a, and includes a suction port 2a for suctioning a fluid and a discharge port 2b for discharging a pressurized fluid as illustrated in FIGS. 2 and 3.

Then, the pump cover 2 is joined to the end surface 1f of the housing main body 1 in a state in which the pump unit U is housed in the housing recessed part 1a, and then is fastened and fixed by a screw b1.

The motor cover 3 is formed of a resin material, is joined to the end surface 1g of the housing main body 1 to cover the housing recessed part 1b, and as illustrated in FIGS. 2 and 3, includes a through hole 3a with the rotation center line L as a center, an annular recessed part 3b, a fixing part 3c for fixing the circuit board CB, and a connector 3d for housing terminals connected to the outside.

The through hole 3a is formed so that a detected unit 5b fixed to an end portion of the rotating shaft 5 is inserted.

The annular recessed part 3b is formed in an annular shape with the rotation center line L as a center so that a cylindrical metal holder 3e is fitted and fixed. The metal holder 3e fits and holds a bearing B2 that rotatably supports the rotating shaft 5.

Then, the motor cover 3 is joined to the end surface 1g of the housing main body 1, has the substrate cover 4 joined thereto from the outside, and is fixed between the two by being fastened with screws b2.

The substrate cover 4 is formed of a metal plate, a resin material, or the like, and is fastened and fixed to the end surface 1g of the housing main body 1 with the screws b2 in a state in which the motor cover 3 is sandwiched therebetween to cover the circuit board CB.

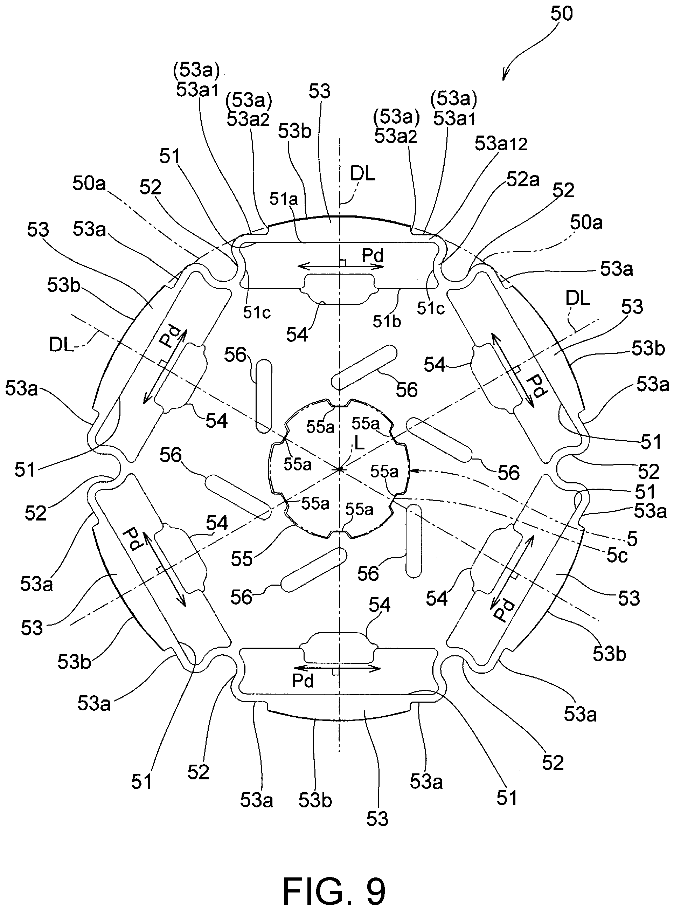

The rotating shaft 5 is formed in a columnar shape centered on the rotation center line L using a metal material, and as illustrated in FIGS. 3 and 9, includes a connecting part 5a having a width across flat on one end side, the detected unit 5b fixed on the other end side, and key grooves 5c on an outer circumference.

Then, the rotating shaft 5 is fitted into a shaft hole 55 of the rotor core 50 included in the permanent magnet-embedded motor M and connected to the inner rotor 11 of the pump unit U by the connecting part 5a, is sealed by the lip-type seal Ls on the outer circumference, is rotatably supported by the bearings B1 and B2, and thereby transmits a rotational force of the rotor Rt to the inner rotor 11.

The detected unit 5b is formed by fitting permanent magnets into the annular holder so that six N poles and S poles alternate around the rotation center line L and is disposed to face a detection sensor C1 mounted on the circuit board CB as illustrated in FIG. 2.

Then, the detected unit 5b functions as a detection target of the detection sensor C1 that detects a rotational angular position of the rotating shaft 5, that is, the rotor Rt.

As illustrated in FIGS. 2 and 3, the pump unit U includes the inner rotor 11 and the outer rotor 12.

The inner rotor 11 is formed using a material such as steel or sintered steel in a substantially star shape that defines an end surface sliding between a bottom wall surface of the housing recessed part 1a of the housing main body 1 and an inner wall surface of the pump cover 2. The inner rotor 11 is formed as an external gear with a trochoidal curved tooth profile including a fitting hole 11a, five protruding parts (peaks) and five recessed parts (valleys).

The fitting hole 11a is formed so that the connecting part 5a of the rotating shaft 5 is fitted thereto.

Then, the inner rotor 11 is rotated by the rotating shaft 5 in a direction of an arrow A in FIGS. 1 and 2 with the rotation center line L as a rotation center.

The outer rotor 12 is formed using a material such as steel or sintered steel in an annular shape that defines the end surface sliding between the bottom wall surface of the housing recessed part 1a of the housing main body 1 and the inner wall surface of the pump cover 2. The outer rotor 12 is formed as an internal gear including a circular outer circumferential surface 12a, six protruding parts, and six recessed parts, and having a tooth profile that can mesh with the inner rotor 11.

The outer circumferential surface 12a comes into contact with an inner circumferential surface of the housing recessed part 1a to be rotatably supported around an axis displaced from the rotation center line L.

Then, the outer rotor 12 rotates at a speed lower than that of the inner rotor 11 while being interlocked with rotation of the inner rotor 11 that rotates around the rotation center line L.

Due to the inner rotor 11 and the outer rotor 12, a fluid is suctioned from the suction port 2a into a pump chamber and is discharged from the discharge port 2b while being pressurized.

The circuit board CB includes parts controlling driving of the permanent magnet-embedded motor M, on which wiring is printed and various electronic parts constituting a control circuit are mounted, and on which the detection sensor C1 facing the detected unit 5b is mounted as illustrated in FIG. 2.

The detection sensor C1 is formed by three Hall elements disposed in an arc shape around the rotation center line L. Further, the detection sensor C1 is configured to detect a magnetic pole position (rotational angular position) in a rotation direction of the rotating shaft 5, that is, the rotor Rt.

As illustrated in FIGS. 5 and 6, the permanent magnet-embedded motor M includes the stator St having the stator core 20, the bobbin 30, and the coil 40, and the rotor Rt having the rotor core 50 and the permanent magnet 60.

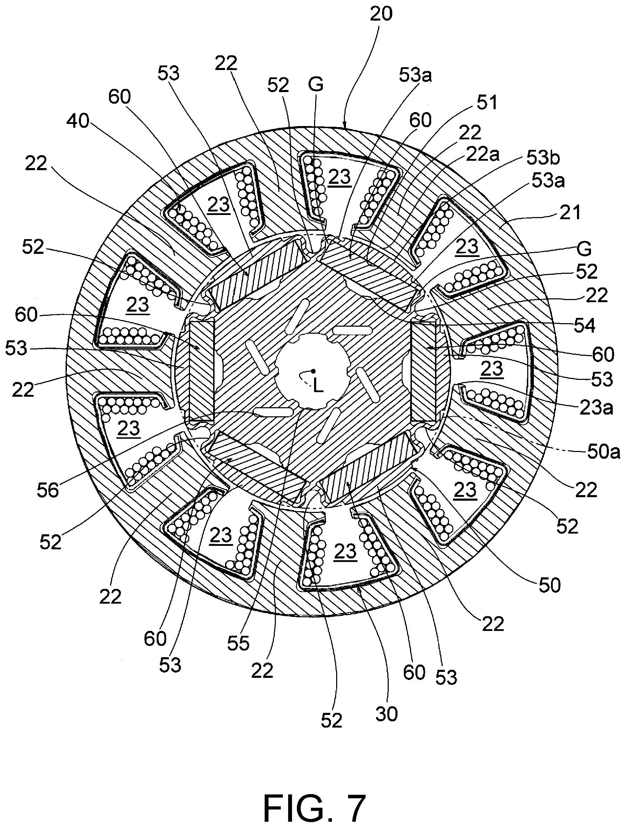

The stator core 20 is formed as a laminate that is press-formed using a steel plate made of a magnetic material and then laminated, and as illustrated in FIGS. 6 and 7, includes an annular part 21, nine teeth 22 as salient poles protruding from the annular part 21 toward the center (rotation center line L) and disposed at regular intervals in a circumferential direction, and nine slots 23 disposed at regular intervals in the circumferential direction.

The nine teeth 22 are formed to have the same shape as each other and are rotationally symmetrical with respect to the rotation center line L, and each have a distal end surface 22a that defines an arcuate surface.

The nine distal end surfaces 22a are disposed on a cylindrical surface having a predetermined diameter dimension and are disposed to face an outer circumferential contour 50a (outer circumferential magnetic pole surface 53b) of the rotor core 50 with a predetermined gap therebetween.

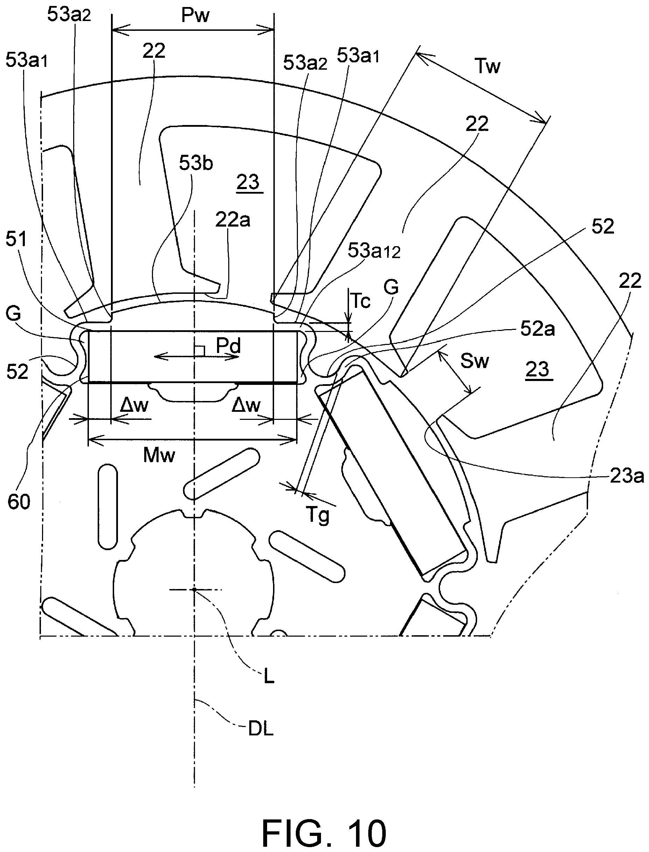

The nine slots 23 are formed to have the same shape as each other and are rotationally symmetrical with respect to the rotation center line L, and each have an opening 23a having an opening width dimension Sw between the teeth 22 on both sides as illustrated in FIG. 10.

The bobbin 30 is formed in a two-part structure using a resin material having electrical insulating properties and is incorporated so as to sandwich the stator core 20 in a direction of the rotation center line L.

The coil 40 employs a concentrated winding structure wound around each of the nine teeth 22 with the bobbin 30 interposed therebetween, and these are divided into three phases and electrically connected.

The rotor core 50 is formed as a laminate that is press-formed using a steel plate made of a magnetic material and then laminated and is formed to define the cylindrical outer circumferential contour 50a facing the teeth 22 (distal end surface 22a) of the stator core 20 with a predetermined gap therebetween as illustrated in FIG. 7.

As illustrated in FIG. 9, the rotor core 50 includes six insertion fitting holes 51 disposed at regular intervals in the circumferential direction, six groove-shaped recessed parts 52 disposed at regular intervals in the circumferential direction, six outer circumferential magnetic pole parts 53 disposed at regular intervals in the circumferential direction, six filling holes 54 disposed at regular intervals in the circumferential direction, the shaft hole 55 for fitting the rotating shaft 5, and six long holes 56 disposed at regular intervals in the circumferential direction.

Here, the six insertion fitting holes 51, the six groove-shaped recessed parts 52, the six outer circumferential magnetic pole parts 53, the six filling holes 54, and the six long holes 56 are each formed to be rotationally symmetrical with respect to the rotation center line L and are each formed to be line-symmetrical with respect to a straight line DL in a radial direction except for the long holes 56, and therefore each one of them will be described below.

The insertion fitting hole 51 is a region to which the permanent magnet 60 is inserted and fixed, that is, an embedded region of the permanent magnet 60, and is formed to have a cross-sectional shape that is long in a perpendicular direction Pd perpendicular to the straight line DL of the rotor Rt in the radial direction as illustrated in FIG. 9.

Specifically, the insertion fitting hole 51 is formed to include two flat surfaces 51a and 51b parallel to the perpendicular direction Pd and two convexly curved surfaces 51c each protruding inward following a wall part 52a of the groove-shaped recessed part 52 at both ends in the perpendicular direction Pd.

When the insertion fitting hole 51 includes two convexly curved surfaces 51c, displacement of the permanent magnet 60 in the perpendicular direction Pd can be suppressed or prevented while providing gaps G on both sides when the permanent magnet 60 is inserted into the insertion fitting hole 51.

The groove-shaped recessed part 52 is formed to have a space having a semicircular cross section by the wall part 52a having a wall thickness dimension Tg between the insertion fitting holes 51 and 51 in the circumferential direction to define the outer circumferential magnetic pole part 53 by dividing the outer circumferential contour 50a in the circumferential direction.

The groove-shaped recessed part 52 functions as a flux barrier that suppresses or prevents leakage and short-circuiting of magnetic lines of force and also serves as a positioning part for inserting a jig for positioning the rotor core 50 when the permanent magnet 60 is assembled into the insertion fitting hole 51.

Here, since the wall thickness dimension Tg of the wall part 52a is formed to be relatively thin within an allowable range in terms of mechanical strength, short-circuiting of magnetic lines of force between adjacent permanent magnets 60 and 60 can be suppressed or prevented.

The outer circumferential magnetic pole part 53 is a region in which a magnetic pole corresponding to the permanent magnet 60 inserted and fitted in the insertion fitting hole 51 is generated, has a shape line-symmetrical with respect to the straight line DL in the radial direction, and includes a pair of notch parts 53a and 53a and an outer circumferential magnetic pole surface 53b as illustrated in FIG. 9.

The pair of notch parts 53a and 53a are line-symmetrical with respect to the straight line DL and are formed from both ends toward a center (straight line DL) side of the outer circumferential magnetic pole part 53 in the circumferential direction to be recessed inward with respect to the outer circumferential contour 50a.

Specifically, as illustrated in FIGS. 9 and 10, the pair of notch parts 53a and 53a each include a flat surface 53a1 extending parallel to the perpendicular direction Pd and parallel to the rotation center line L with respect to the straight line DL, and a rising surface 53a2 rising from the flat surface 53a1 toward the outer circumferential magnetic pole surface 53b.

Here, a wall thickness dimension Tc of a wall part 53a12 defining the flat surface 53a1 is formed to be substantially the same as the wall thickness dimension Tg of the wall part 52a defining the groove-shaped recessed part 52.

Then, the pair of notch parts 53a and 53a function as a flux barrier that increases a gap between the rotor core 50 and the teeth 22 (distal end surface 22a) of the stator core 20 and play a role of collecting magnetic lines of force flowing through the outer circumferential magnetic pole part 53 on the outer circumferential magnetic pole surface 53b close to the center to increase a useful magnetic flux toward the teeth 22.

The outer circumferential magnetic pole surface 53b is a region sandwiched by the pair of notch parts 53a and 53a in the circumferential direction, forms a curved surface having a curvature of 2/D when an outer diameter dimension of a cylindrical curved surface defining the outer circumferential contour 50a, that is, the outer circumferential contour 50a is assumed to be D, and faces the distal end surface 22a of the teeth 22 with a predetermined gap therebetween.

The filling hole 54 is a region filled with an adhesive for fixing the permanent magnet 60 and is formed in communication with the insertion fitting hole 51 on an inner side of the insertion fitting hole 51 in the radial direction.

That is, when the filling hole 54 is filled with an adhesive after the permanent magnet 60 is inserted into the insertion fitting hole 51, a surface of the permanent magnet 60 facing inward in the radial direction and the flat surface 51b of the insertion fitting hole 51 are adhered to each other.

As illustrated in FIG. 9, the shaft hole 55 is for fitting the rotating shaft 5 and includes six protrusions 55a that fit into the key grooves 5c of the rotating shaft 5.

The long hole 56 is formed on a radial outer side of the shaft hole 55 to extend in a direction inclined with respect to the straight line DL. The long hole 56 allows elastic deformation of a peripheral region of the protrusion 55a when the rotating shaft 5 is fitted into the shaft hole 55. Thereby, a fitting operation of the rotating shaft 5 can be smoothly performed.

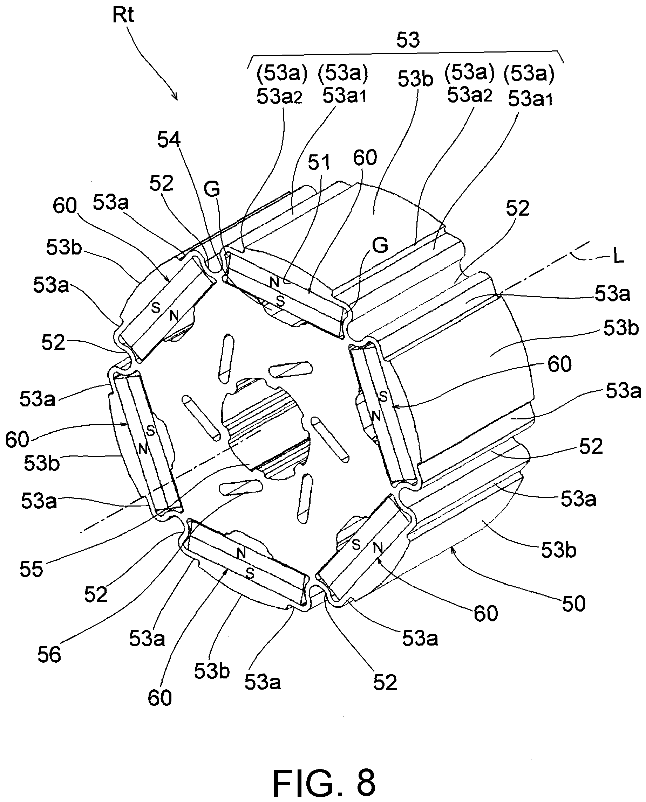

As illustrated in FIGS. 7 and 10, the six permanent magnets 60 have the same shape and are each formed in a flat plate shape having a rectangular cross section which is long in the perpendicular direction Pd. Then, as illustrated in FIG. 8, the six permanent magnets 60 are each oriented so that an N pole and an S pole face each other in the radial direction (straight line DL direction) of the rotor core 50 and are inserted and fitted at regular intervals in the circumferential direction around the rotation center line L so that the poles facing outward are alternately replaced. Also, the permanent magnet 60 is inserted and fitted into the insertion fitting hole 51 of the rotor core 50 with the gaps G provided at both ends in the perpendicular direction Pd.

Here, since the gaps G are provided on both sides of the permanent magnet 60, magnetic lines of force being self-short-circuited from the N pole to the S pole of the permanent magnet 60 can be prevented.

Also, since one permanent magnet 60 having a simple form of a flat plate shape is disposed corresponding to one outer circumferential magnetic pole part 53, a structure thereof can be simplified and costs can be reduced compared to a configuration in which a permanent magnet having a curved shape is disposed corresponding to one outer circumferential magnetic pole part 53 or a configuration in which a plurality of permanent magnets is disposed corresponding to one outer circumferential magnetic pole part 53.

In the permanent magnet-embedded motor M having the above-described configuration, as illustrated in FIG. 10, a relationship between a width dimension Pw of the outer circumferential magnetic pole surface 53b in the perpendicular direction Pd and a width dimension Mw of the permanent magnet 60 in the perpendicular direction Pd is set to satisfy Pw < Mw.

When the relationship is set in this way, magnetic lines of force emitted from the permanent magnet 60 can be collected on the center (straight line DL) side of the outer circumferential magnetic pole surface 53b while suppressing leakage from both sides of the outer circumferential magnetic pole part 53.

Particularly, a value of (Mw-Pw)/2 = Δw is preferably set to 3 mm or less. Thereby, a useful magnetic flux contributing to a rotational torque can be increased while reducing a cogging torque.

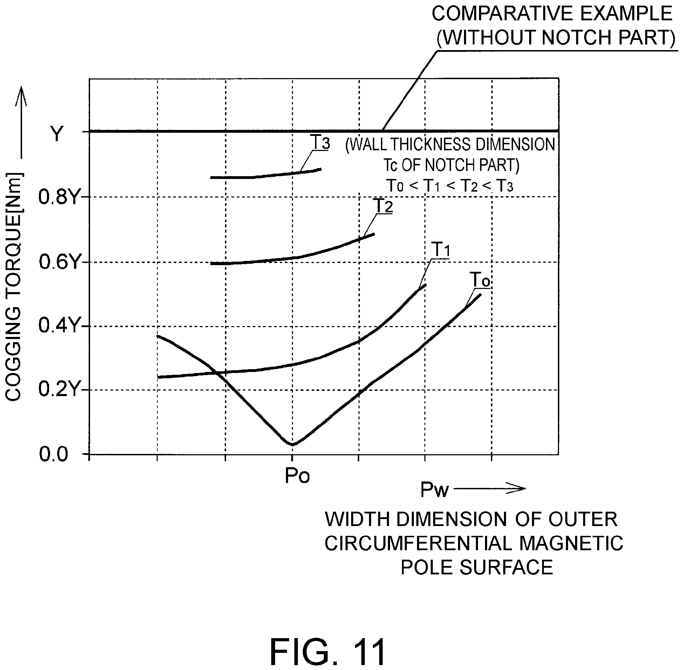

Also, in the permanent magnet-embedded motor M having the above-described configuration, a relationship between the width dimension Pw of the outer circumferential magnetic pole surface 53b, the wall thickness dimension Tc of the wall part 53a12 defining the notch part 53a, and the cogging torque will be described with reference to FIGS. 11 to 13.

FIG. 11 is a result of a simulation showing a change in cogging torque when the wall thickness dimension Tc of the notch part 53a is set to various values and the width dimension Pw of the outer circumferential magnetic pole surface 53b is changed. Here, To, T1, T2, and T3 (provided that, To < T1 < T2 < T3) were selected as the wall thickness dimension Tc. Further, a value of To is, for example, equivalent to the wall thickness dimension Tg of the wall part 52a of the groove-shaped recessed part 52.

As is apparent from the results illustrated in FIG. 11, when the pair of notch parts 53a and 53a are provided, the cogging torque is smaller in all specifications as compared with a comparative example in which the pair of notch parts 53a and 53a are not provided. Also, when the wall thickness dimension Tc increases, the cogging torque does not change that much even if the width dimension Pw is changed, and when the wall thickness dimension Tc decreases, the cogging torque decreases as a whole and, particularly at a specification in which the wall thickness dimension Tc is To, the cogging torque is the smallest when the width dimension Pw of the outer circumferential magnetic pole surface 53b is a value of Po.

That is, when the wall thickness dimension Tc of the wall part 53a12 defining the flat surface 53a1 is To, the cogging torque is the smallest when the width dimension Pw of the outer circumferential magnetic pole surface 53b is in the vicinity of the value of Po, and the cogging torque shows V-shaped characteristic in which the cogging torque increases at specifications in which the width dimension Pw is smaller and larger than Po.

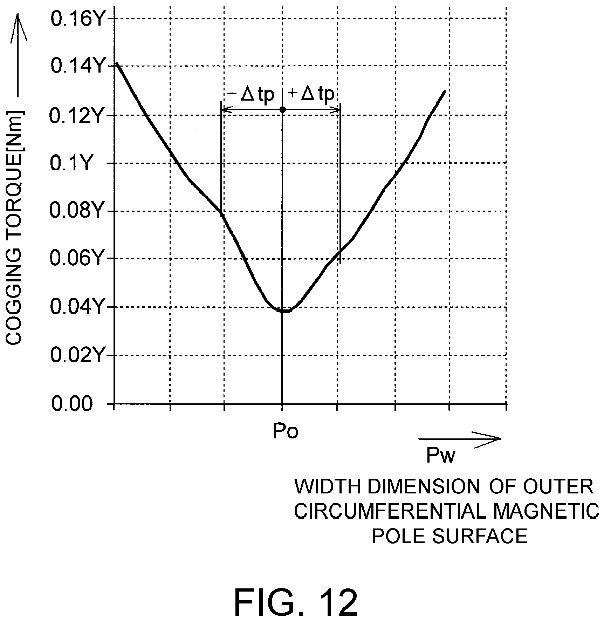

Therefore, in order to effectively reduce the cogging torque, as illustrated in FIG. 12, when a range allowed in manufacturing is taken into consideration, for example, when a tolerance thereof is ±Δtp, the value of the width dimension Pw is preferably set to a value in a range of Po-Δtp to Po+Δtp with the value of Po as a median value (optimal value).

Also, since the cogging torque can be reduced as the value of the wall thickness dimension Tc becomes smaller as illustrated in FIG. 11, the value of the wall thickness dimension Tc is set as small as possible in consideration of restrictions on mechanical strength.

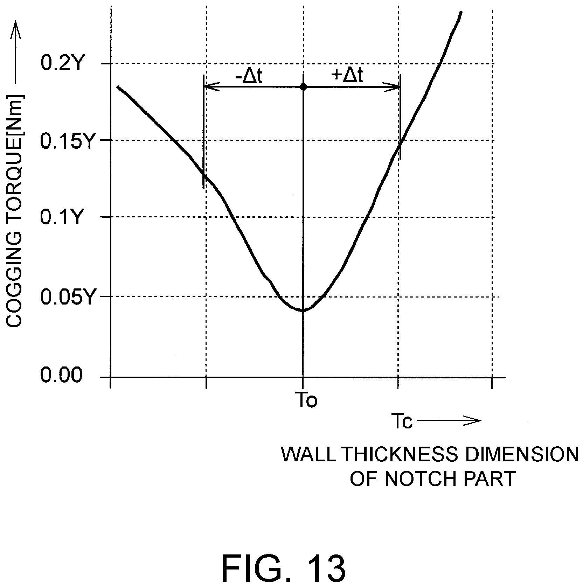

Here, when the wall thickness dimension Tg of the wall part 52a of the groove-shaped recessed part 52 is set to a value in a range of Tg-Δt to Tg+Δt, for example, when a tolerance thereof is +Δt due to restrictions on mechanical strength, the value of the wall thickness dimension Tc is preferably set to a value in a range of To-Δt to To+Δt with the value of To as a median value as illustrated in FIG. 13.

That is, the wall thickness dimension Tc of the wall part 53a12 defining the flat surface 53a1 is preferably set to be equivalent to the wall thickness dimension Tg of the wall part 52a defining the groove-shaped recessed part 52.

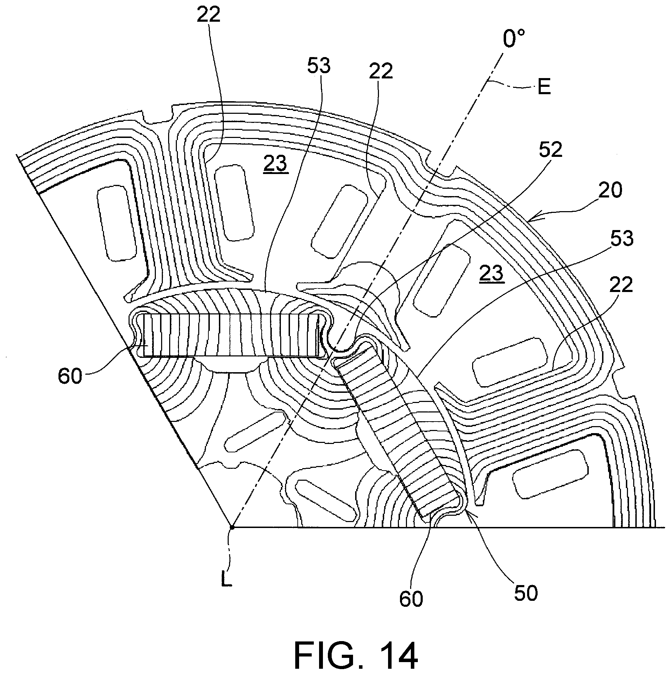

Results of simulating a distribution state of magnetic lines of force due to the permanent magnet 60 in the permanent magnet-embedded motor M having the above-described configuration will be described with reference to FIGS. 14 to 17.

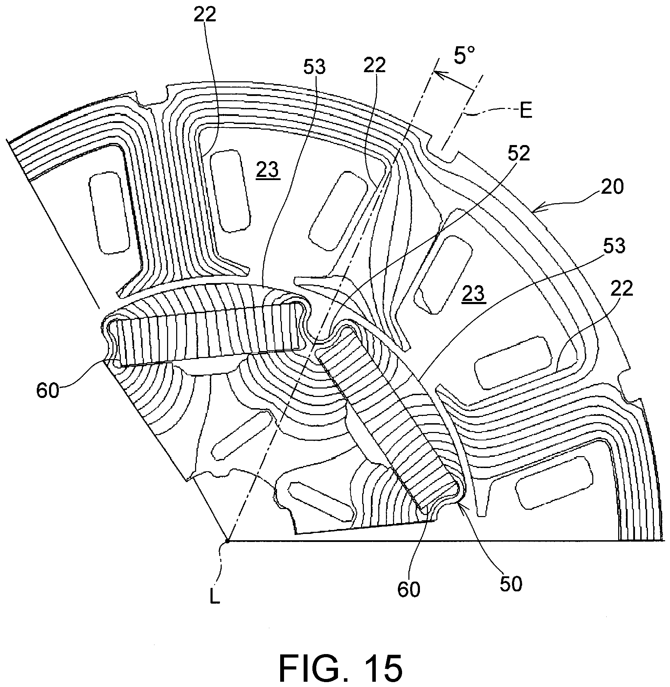

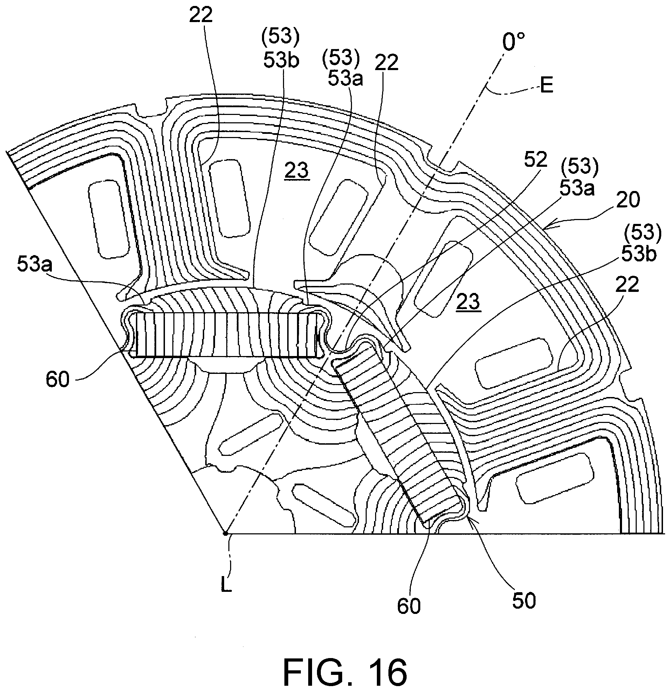

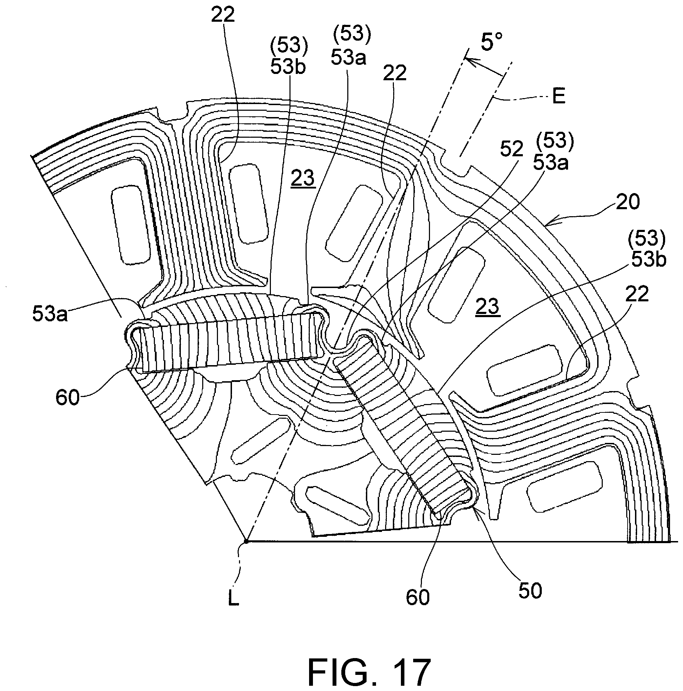

FIGS. 14 and 15 are distribution diagrams of magnetic lines of force in a comparative example in which the pair of notch parts 53a and 53a are not provided in the rotor core 50, and FIGS. 16 and 17 are distribution diagrams of magnetic lines of force in an example in which the pair of notch parts 53a and 53a are provided in the rotor core 50.

In the comparative example, as illustrated in FIG. 14, in a state in which the rotor Rt is stopped at a rotation angle of 0°, the same number of magnetic lines of force flow through the teeth 22 on both sides sandwiching the straight line E.

Therefore, as illustrated in FIG. 15 from the state illustrated in FIG. 14, when the rotor Rt is rotated counterclockwise by a rotation angle of 5°, the number of magnetic lines of force flowing through the teeth 22 on the right side is smaller than the number of magnetic lines of force flowing through the teeth 22 on the left side.

As a result, a cogging torque trying to rotate the rotor Rt clockwise in an attempt to return to a magnetically stable state is generated. Also, in the comparative example, as illustrated in FIGS. 14 and 15, a relatively large number of magnetic lines of force are short-circuited between adjacent outer circumferential magnetic pole parts 53 and 53 from both end sides of the outer circumferential magnetic pole parts 53 via the central tooth 22.

On the other hand, in the example, as illustrated in FIG. 16, in a state in which the rotor Rt is stopped at a rotation angle of 0°, the same number of magnetic lines of force flow through the teeth 22 on both sides sandwiching the straight line E.

Therefore, as illustrated in FIG. 17 from the state illustrated in FIG. 16, when the rotor Rt is rotated counterclockwise by a rotation angle of 5°, the number of magnetic lines of force flowing through the teeth 22 on the right side increases and comes close to the number of magnetic lines of force flowing through the teeth 22 on the left side as compared with the comparative example illustrated in FIG. 15.

As a result, the cogging torque trying to rotate the rotor Rt clockwise in an attempt to return to a magnetically stable state is smaller than that in the comparative example.

Also, in the example, as illustrated in FIGS. 16 and 17, the number of magnetic lines of force short-circuiting between adjacent outer circumferential magnetic pole parts 53 and 53 from both end sides of the outer circumferential magnetic pole parts 53 via the central tooth 22 is reduced as compared with that in the comparative example. As a result, a useful magnetic flux that is effective for the rotational torque can be increased.

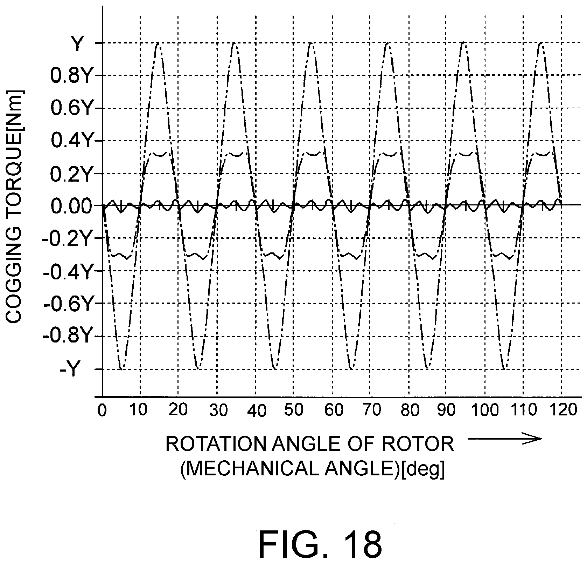

The cogging torque of the example and the comparative example having the above-described configurations have results as illustrated in FIG. 18. In FIG. 18, the cogging torque of the comparative example is shown by a two-dot dashed line, a result of the cogging torque of the example for a specification in which the width dimension Pw and the wall thickness dimension Tc have optimum values (Po, To) is shown by a solid line, and a result corresponding to upper and lower limit values of the tolerance is shown by a dashed-dotted line.

As is apparent from the results shown in FIG. 18, according to the example in which the pair of notch parts 53a and 53a are provided, the cogging torque can be reduced to 1/3 to 1/20 with respect to the cogging torque of the comparative example in which the pair of notch parts 53a and 53a are not provided.

Therefore, based on the above-described results, according to the results of the simulation by changing mutual dimensions of the distal end width dimension Tw of the teeth 22, the opening width dimension Sw of the slot 23, and the width dimension Pw of the outer circumferential magnetic pole surface 53b in the permanent magnet-embedded motor M, in a case of a relative shape relationship satisfying the relationship of Tw : Sw : Pw = 4.5 to 6.5 : 1 to 3 : 5 to 7, it was ascertained that leakage of the magnetic flux from both end sides of the outer circumferential magnetic pole parts 53 could be suppressed to increase the useful magnetic flux toward the teeth 22, and the cogging torque could be effectively reduced.

As described above, according to the permanent magnet-embedded motor M having the above-described configuration, the cogging torque can be reduced while simplifying the structure and reducing costs.

Also, when the permanent magnet-embedded motor M having the above-described configuration is applied as a drive source of a pump device, a pump device with less vibration and noise can be obtained. Further, when such a pump device is applied for supply and circulation of an oil in an automobile or the like, vibration and noise in the automobile can be reduced.

Further, an operation of the permanent magnet-embedded motor M having the above-described configuration is the same as that of the conventional permanent magnet-embedded motor, and thus description thereof is omitted here.

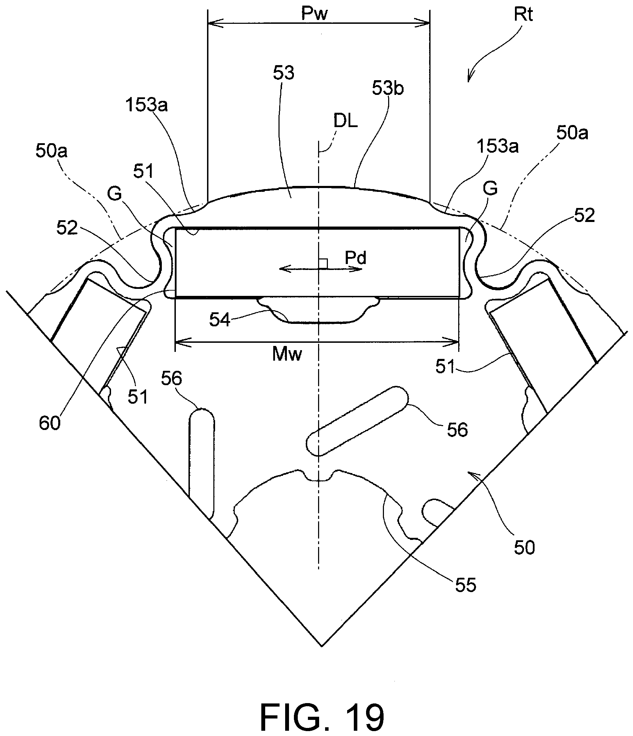

FIG. 19 illustrates another embodiment of a pair of notch parts provided in a rotor core 50 which forms a part of the permanent magnet-embedded motor M. Components that are the same as those in the above-described embodiment will be designated by the same reference signs and description thereof will be omitted.

In this embodiment, the rotor core 50 includes six insertion fitting holes 51, six groove-shaped recessed parts 52, six outer circumferential magnetic pole parts 53, six filling holes 54, a shaft hole 55, and six long holes 56.

The outer circumferential magnetic pole parts 53 each includes a pair of notch parts 153a and 153a and an outer circumferential magnetic pole surface 53b.

The pair of notch parts 153a and 153a are line-symmetrical with respect to a straight line DL and are formed from both ends toward a center (straight line DL) side of the outer circumferential magnetic pole part 53 in a circumferential direction to be recessed inward with respect to an outer circumferential contour 50a.

Specifically, the pair of notch parts 153a and 153a extend parallel to a rotation center line L and are formed as concave curved surfaces that are recessed inward with respect to the outer circumferential contour 50a and are connected to the outer circumferential magnetic pole surface 53b from both ends.

Also in this embodiment, since a wall thickness dimension of a wall part defining the pair of notch parts 153a and 153a is made small, similarly to that described above, a cogging torque can be reduced as compared with that in the comparative example in which the pair of notch parts 53a and 53a are not provided.

In the above-described embodiment, as a permanent magnet-embedded motor including a stator having a plurality of teeth and slots disposed in the circumferential direction, and a rotor having a plurality of insertion fitting holes disposed in the circumferential direction and a plurality of permanent magnets inserted and fitted in the insertion fitting holes, the permanent magnet-embedded motor M including the stator St having nine teeth 22 and slots 23 and the rotor Rt having six insertion fitting holes 51 (that is, six permanent magnets 60), that is the permanent magnet-embedded motor M in which the number of magnetic poles of the rotor Rt is six and the number of teeth and slots of the stator St is nine is illustrated.

However, the disclosure is not limited to the above-described configuration and can be similarly applied to a permanent magnet-embedded motor having another configuration that satisfies a condition in which the number of magnetic poles of the rotor is 2n (n is a natural number), and the number of teeth and slots of the stator is 3n (n is a natural number), respectively.

In the above-described embodiment, as the groove-shaped recessed part provided in the rotor core 50, the groove-shaped recessed part 52 forming a space having a semicircular cross section is illustrated, but the disclosure is not limited thereto, and a groove-shaped recessed part having another cross-sectional shape may be employed as long as it is formed between the insertion fitting holes in the circumferential direction to define the outer circumferential magnetic pole part that generates a magnetic pole corresponding to the permanent magnet.

In the above-described embodiment, as the insertion fitting hole provided in the rotor core 50, the insertion fitting hole 51 having the convexly curved surface 51c on both sides are illustrated, but the disclosure is not limited thereto, and an insertion fitting hole in which wall surfaces on both sides have another form may be employed.

In the above-described embodiment, in the pump device using the permanent magnet-embedded motor M as a drive source, a case in which a trochoid pump is employed as a pump unit is illustrated, but the disclosure is not limited thereto, and a vane pump or pumps of other types may be employed.

As described above, since the permanent magnet-embedded motor of the disclosure can be simplified in the structure, reduced in costs, and reduced in cogging torque, the permanent magnet-embedded motor is not only applicable as a drive source for pump devices but also useful as a drive source for various devices.

### [Reference Signs List]

U: Pump unit (trochoid pump)
2a: Suction port
2b: Discharge port
5: Rotating shaft
11: Inner rotor (trochoid pump)
12: Outer rotor (trochoid pump)
M: Permanent magnet-embedded motor (drive source)
L: Rotation center line
St: Stator
20: Stator core
22: Teeth
22a: Distal end surface
Tw: Distal end width dimension of teeth
23: Slot
23a: Slot opening
Sw: Opening width dimension of slot
40: Coil
Rt: Rotor
50: Rotor core
50a: Outer circumferential contour
DL: Straight line (radial direction)
Pd: Perpendicular direction with respect to radial direction of rotor
51: Insertion fitting hole
51c: Convexly curved surface
52: Groove-shaped recessed part
52a: Wall part
Tg: Wall thickness dimension of wall part defining groove-shaped recessed part
53: Outer circumferential magnetic pole part
53a: Pair of notch parts
53a1: Flat surface
53a12: Wall part defining flat surface
Tc: Wall thickness dimension of wall part defining flat surface 53a2: Rising surface
53b: Outer circumferential magnetic pole surface
54: Filling hole
60: Permanent magnet
Mw: Width dimension of permanent magnet in perpendicular direction
G: Gap
153a: Pair of notch parts

## Claims

1. A permanent magnet-embedded motor (M), **characterized in** comprising:
a stator (St), including: a stator core (20) in an annular shape having teeth (22) and slots (23) disposed in a circumferential direction, and coils (40) wound around the teeth (22); and
a rotor (Rt), including: a rotor core (50) having insertion fitting holes (51) disposed to face the teeth (22) of the stator (St) and disposed in the circumferential direction, and permanent magnets (60) inserted and fitted into the insertion fitting holes (51),
wherein the rotor core (50) includes:
a groove-shaped recessed part (52), provided between the insertion fitting holes (51) in the circumferential direction to define an outer circumferential magnetic pole part (53) which generates a magnetic pole corresponding to each of the permanent magnets (60);
a pair of notch parts (53a, 53a), provided from both ends toward a center side of each of the outer circumferential magnetic pole parts (53) in the circumferential direction to be recessed inward with respect to an outer circumferential contour (50a); and
an outer circumferential magnetic pole surface (53b), sandwiched between the pair of notch parts (53a, 53a).

2. The permanent magnet-embedded motor (M) according to claim 1, wherein
the insertion fitting hole (51) has a cross-sectional shape which is long in a perpendicular direction (Pd) perpendicular to a radial direction of the rotor (Rt), and
the permanent magnet (60) has a flat plate shape having a rectangular cross section which is long in the perpendicular direction (Pd) and is inserted and fitted into the insertion fitting hole (51) with gaps (G) provided at both ends in the perpendicular direction (Pd).

3. The permanent magnet-embedded motor (M) according to claim 1, wherein
the groove-shaped recessed part (52) is provided to have a space having a semicircular cross section,
the insertion fitting hole (51) has a cross-sectional shape which is long in a perpendicular direction (Pd) with respect to a radial direction of the rotor (Rt) and includes a convexly curved surface (51c) protruding inward following a wall part (52a) of the groove-shaped recessed part (52) at both ends in the perpendicular direction (Pd), and
the permanent magnet (60) has a flat plate shape having a rectangular cross section which is long in the perpendicular direction (Pd) and is inserted and fitted into the insertion fitting hole (51) with gaps (G) provided at both ends in the perpendicular direction (Pd).

4. The permanent magnet-embedded motor (M) according to claim 2 or 3, wherein
when a width dimension (Pw) of the outer circumferential magnetic pole surface (53b) is Pw, and a width dimension (Mw) of the permanent magnet (60) in the perpendicular direction (Pd) is Mw,
Pw < Mw is satisfied.

5. The permanent magnet-embedded motor (M) according to any one of claim 2 to 4, wherein
when a width dimension (Pw) of the outer circumferential magnetic pole surface (53b) is Pw, and a width dimension (Mw) of the permanent magnet (60) in the perpendicular direction (Pd) is Mw,
a value of (Mw-Pw)/2 = Δw is set to 3 mm or less.

6. The permanent magnet-embedded motor (M) according to any one of claims 1 to 5, wherein the pair of notch parts (53a, 53a) each include:
a flat surface (53a1), extending parallel to a perpendicular direction (Pd) perpendicular to a radial direction of the rotor (Rt) and parallel to a rotation center line (L) of the rotor (Rt); and
a rising surface (53a2), rising from the flat surface (53a1) toward the outer circumferential magnetic pole surface (53b).

7. The permanent magnet-embedded motor (M) according to claim 6, wherein
a wall thickness dimension (Tc) of a wall part (53a12) defining the flat surface (53a1) is provided to be substantially the same as a wall thickness dimension (Tg) of a wall part (52a) defining the groove-shaped recessed part (52).

8. The permanent magnet-embedded motor (M) according to any one of claims 1 to 7, wherein
when a distal end width dimension (Tw) of the teeth (22) is Tw, an opening width dimension (Sw) of the slot (23) is Sw, and a width dimension (Pw) of the outer circumferential magnetic pole surface (53b) is Pw,
a relationship of Tw : Sw : Pw = 4.5 to 6.5 : 1 to 3 : 5 to 7 is satisfied.

9. The permanent magnet-embedded motor (M) according to any one of claims 1 to 8, wherein
the rotor core (50) includes a filling hole (54) provided to be communicating with the insertion fitting hole (51) and filled with an adhesive on an inner side of the insertion fitting hole (51) in a radial direction.

10. The permanent magnet-embedded motor (M) according to any one of claims 1 to 9, wherein
a number of magnetic poles of the rotor (Rt) is 2n, and
a number of teeth (22) and slots (23) of the stator (St) is 3n respectively,
where n is a natural number.

11. A pump device, **characterized in that** comprising:
a pump unit (U) which performs suctioning and discharging of a fluid;
a rotating shaft (5), connected to the pump unit (U); and
a drive source (M), exerting a driving force on the rotating shaft (5),
wherein the drive source (M) is the permanent magnet-embedded motor (M) according to any one of claims 1 to 10.

12. The pump device according to claim 11, wherein
the pump unit (U) is a trochoid pump including:
an inner rotor (11) to which the rotating shaft (5) is connected; and
an outer rotor (12) that meshes with the inner rotor (11).
